# EUROPÄISCHE PATENTSCHRIFT

(11) **EP 0 949 948 B1**
(45) Veröffentlichungstag und Bekanntmachung des Hinweises auf die Patenterteilung: **11.07.2001**
(21) Anmeldenummer: 96944647.5
(22) Anmeldetag: 23.12.1996
(51) Int. Cl.: B01D 24/30, C02F 3/08

(54) **VERFAHREN UND VORRICHTUNG ZUM KONTINUIERLICHEN FILTERN VON FLÜSSIGKEITEN**
METHOD AND DEVICE FOR CONTINUOUS FILTRATION OF LIQUIDS
PROCEDE ET DISPOSITIF DE FILTRATION EN CONTINU DE LIQUIDES

(43) Veröffentlichungstag der Anmeldung: 20.10.1999
(73) Patentinhaber: Schade, Horst, Dipl.-Ing., 45525 Hattingen (DE)
(72) Erfinder: Schade, Horst, Dipl.-Ing., 45525 Hattingen (DE)
(74) Vertreter: Behrendt, Arne, Dipl.-Ing.
(86) Internationale Anmeldenummer: EP9605820
(87) Internationale Veröffentlichungsnummer: WO9828058

(56) Entgegenhaltungen:
- EP-B- 0 128 234
- EP-B- 0 291 538
- DE-A- 1 932 221
- US-A- 5 454 959
- US-A- 5 462 654

## Beschreibung

Die Erfindung betrifft ein Verfahren zum kontinuierlichen Filtrieren von mit Feststoff beladenen Flüssigkeiten, insbesondere zum Reinigen von Abwässern, mittels eines aus körnigem Filtermaterial bestehenden Filterbettes, welches kontinuierlich durch einen senkrecht angeordneten zylindrischen Ringraum (2) bewegt wird, der kontinuierlich in radialer Richtung von der zu filtrierenden Flüssigkeit durchströmt wird, wobei
- das mit den abgefilterten Feststoffen beladene körnige Filtermaterial am unteren Ende des Ringraumes kontinuierlich abgezogen, nach oben gefördert, von den abgefilterten Feststoffen befreit und dem Ringraum am oberen Ende wieder zugeführt wird,
- als körniges Filtermaterial ein Korngemisch mit einem zwei oder mehr Korngrößen umfassenden Kornspektrum von Grobkorn bis Feinkorn verwendet wird,
- und dieses Korngemisch vor oder während der Zufuhr in den Ringraum derart klassiert und verteilt wird, daß die Korngrößen in der Schüttung des Filterbettes in Fließrichtung der zu filtrierenden Flüssigkeit gesehen kleiner wird.

Bei den nach dem Stande der Technik seit langem bekannten Verfahren der genannten Art (vgl. DE-C-329 176, DE-A-1 932 221 oder EP-B-O 128 234) ist es üblich, daß die zu filtrierende Flüssigkeit den das Filterbett aufnehmenden Ringraum in radialer Richtung von außen nach innen durchströmt, wobei die Körnung des Filtermaterials von außen nach innen abnimmt.

Ein Problem bei derartigen Filterverfahren besteht darin, daß die zu filtrierenden Flüssigkeiten die Feststoffpartikel oft in Form von Flocken enthalten, die bei zu geringer Strömungsgeschwindigkeit die Freiräume zwischen den Partikeln des körnigen Filtermaterials schnell verstopfen können. Die Gefahr dieser Verstopfung besteht insbesondere in den unmittelbar an den Flüssigkeitseintritt angrenzenden Bereichen des Filterbettes (Oberflächenfiltration). Die erwähnten Verstopfungen treten selbst dann auf, wenn in den unmittelbar an den Flüssigkeitseintritt angrenzenden Bereichen des Filterbettes die Körnung des Filtermaterials gröber ist, als in den an den Flüssigkeitsaustritt angrenzenden Bereichen.

Um diesen Verstopfungen durch Feststoff-Flocken zu begegnen, ist es bereits bekannt, (vgl. EP 0 291 538 B1) vor dem Flüssigkeitseintritt ein entsprechend engmaschiges Siebgewebe vorzusehen, welches die Flocken zurückhält. Das hat allerdings den Nachteil, daß dieses Siebgewebe in regelmäßigen Abständen von den zurückgehaltenen Flocken gereinigt werden muß, wozu aufwendige Reinigungsvorrichtungen benötigt werden.

Es ist Aufgabe der Erfindung, das Verfahren der eingangs genannten Art dahingehend weiterzubilden, daß mit Feststoff-Flocken beladene Flüssigkeiten besser abgefiltert werden können. Insbesondere sollen Verstopfungen durch die abgeschiedenen Feststoff-Flocken besser und auf einfache Weise vermieden werden. Zugleich soll für eine kontinuierliche Abfuhr der abgeschiedenen Feststoff-Flocken gesorgt werden.

Zur Lösung dieser Aufgabe schlägt die Erfindung ausgehend von dem Verfahren der eingangs genannten Art vor, daß einerseits die Korngrößen in der Schüttung des Filterbettes in radialer Richtung gesehen von innen nach außen kleiner werden und andererseits die zu filtrierende Flüssigkeit das Filterbett in radialer Richtung von innen nach außen mit von innen nach außen abnehmender Fließgeschwindigkeit durchströmt.

Es hat sich überraschenderweise herausgestellt, daß durch die erfindungsgemäß vorgeschlagene Umkehrung der Fließrichtung die oben erwähnten Verstopfungen vollständig vermieden werden können. Das ist darauf zurückzuführen, daß beim Verfahren gemäß der Erfindung erstmals auf die sich bei der radialen Durchströmung eines zylindrischen Ringraumes ergebenden, stark unterschiedlichen Fließgeschwindigkeiten Rücksicht genommen worden ist. Bei der radialen Durchströmung eines zylindrischen Ringraumes von innen nach außen nimmt aufgrund der geometrischen Verhältnisse die Fließgeschwindigkeit über den Strömungsweg stark ab, und zwar überproportional. Beim Verfahren gemäß der Erfindung ist daher die Fließgeschwindigkeit der zu filtrierenden Flüssigkeit im Einlaufbereich in das Filterbett, d. h. dort wo sich das grobkörnige Filtermaterial befindet, am größten. Infolgedessen ergibt sich dort eine Tiefenfiltration, bei der die eingetragenen Feststoff-Flocken tief in das Volumen des Filterbettes eingetragen werden, welches dementsprechend erheblich größere Mengen an Feststoff-Flocken aufnehmen kann, ehe es verstopft. Beim sich anschließenden Abscheiden der feinere Schmutzpartikel aus der zu filtrierenden Flüssigkeit im Bereich des feinkörnigen Filtermaterials ist demgegenüber die Strömungsgeschwindigkeit erheblich geringer, so daß die feinen Schmutzpartikel ausreichend Zeit haben, sich an dem feinkörnigen Filtermaterial anzulagern. Im Ergebnis wird beim Verfahren gemäß der Erfindung die Verstopfungsgefahr nahezu vollständig eliminiert und der Wirkungsgrad der Filteranlage erheblich verbessert.

Eine zweckmäßige Weiterbildung des Verfahrens gemäß der Erfindung sieht vor, daß die zu filtrierende Flüssigkeit im Bereich der Außenwand des das Filterbett aufnehmenden Ringraumes einer zusätzlichen Filtration mittels eines feinmaschigen Siebgewebes oder mittels Filterdüsen unterzogen wird. Diese zusätzliche Filtration am Ende des Strömungsweges der zu filtrierenden Flüssigkeit hält zuverlässig das feinkörnige Filtermaterial zurück und bewirkt darüber hinaus einen hohen Strömungswiderstand am Ende des Strömungsweges, so daß sich im Filterbett selbst ein verhältnismäßig geringes Druckgefälle einstellt, was zur Vergleichmäßigung der Strömungsverhältnisse im Filterbett in axialer Richtung beiträgt.

Weiterhin ist vorgesehen, daß die zu filtrierende Flüssigkeit vor der Einleitung in das Filterbett in einer Umlenkkammer durch eine 180°-Umlenkung von groben und schweren Feststoffpartikeln befreit wird. Diese sehr einfache aber für grobe und schwere Feststoffpartikel sehr effektive Vorabscheidung vermindert die Menge der in das Filtermaterial eingetragenen Feststoffpartikel und damit ebenfalls die Verstopfungsgefahr.

Gegenstand der Erfindung ist weiterhin eine Vorrichtung zum kontinuierlichen Filtern von mit Feststoffen beladenen Flüssigkeiten zur Durchführung des oben erläuterten Verfahrens, mit folgenden Merkmalen:
- ein zylindrisches Gehäuse mit einem senkrecht angeordneten zylindrischen Ringraum für das körnige Filtermaterial mit flüssigkeitsdurchlässiger Innenwand und Außenwand,
- einer am unteren Ende des Ringraumes angeordneten Abzugsvorrichtung für das mit Feststoffen beladene körnige Filtermaterial,
- einer Mammutpumpe, deren in der Mitte des Gehäuses verlaufendes Förderrohr von der Abzugsvorrichtung bis über das obere Ende des Ringraumes reicht,
- einer zwischen dem oberen Austragsende des Förderrohres und dem oberen Ende des Ringraumes angeordneten Reinigungsvorrichtung für das körnige Filtermaterial,
- einer zwischen der Reinigungsvorrichtung und dem oberen Ende des Ringraumes angeordneten Zuführvorrichtung, die das gereinigte körnige Filtermaterial dem Ringraum im Bereich von dessen Außenwand zuführt,
- einem zwischen der flüssigkeitsdurchlässigen Innenwand und dem Förderrohr angeordneten Leitrohr für die zu filtrierende Flüssigkeit, welches am oberen Ende einen Anschluß für die zu filtrierende Flüssigkeit aufweist und am unteren Ende mit einem Umlenkraum verbunden ist, in welchem die zu filtrierende Flüssigkeit von der fallenden Fließrichtung in die steigende Fließrichtung umgelenkt und in den Ringspalt zwischen dem Leitrohr und der flüssigkeitsdurchlässigen Innenwand eingeleitet wird, wobei der Umlenkraum mit einem Schlammaustrag versehen ist, der mit dem Ansaugkopf der Mammutpumpe in Verbindung steht.

Der im Bereich der Umlenkung sedimentierte Schlamm wird im Konusbereich außerhalb der Filterzone der Mammutpumpe zugeführt, belastet also das Filterbett nicht. Weitere Vorteile ergeben sich aus der zunächst fallenden Strömungsrichtung der zu filtrierenden Flüssigkeit, der Umlenkung in die steigende Strömungsrichtung und die Einleitung in das Filterbett aus der steigenden Fließrichtung heraus. Bei Einleitung der zu filtrierenden Flüssigkeit aus einem aufsteigenden Strom heraus wird zwangsläufig im unteren Bereich, d. h. in dem Bereich, aus dem das körnige Filtermaterial ohnehin bald ausgetragen wird, mehr Schmutz eingetragen, als im oberen Bereich. In der aufsteigenden Strömung findet nämlich bereits eine gewisse Entmischung der zu filternden Flüssigkeit statt.

Weiterhin ist vorgesehen, daß die flüssigkeitsdurchlässige Außenwand des Aufnahmeraumes an ihrer Innenseite von einem Mikrofiltertuch abgedeckt ist, welches auf einer mit Drainagekanälen versehenen Stützstruktur aufliegt. Dieses Mikrofiltertuch wird durch das kontinuierlich absinkende Filterbett an seiner inneren Oberfläche ständig gereinigt. Diese Reinigung kann ggf. durch hydraulische Druckstöße unterstützt werden, die von der Filtratseite her eine kurzzeitige Rückströmung durch das Mikrofiltertuch bewirken. Durch die Stützstruktur, auf welcher das Mikrofiltertuch aufliegt, wird sichergestellt, daß hinter dem Filtertuch das durchtretende Filtrat ständig und problemlos abgeführt werden kann. Die Stützstruktur kann beispielsweise die Form eines Wellblechs oder einer ähnlich strukturierten Drainage (wie Rohre) haben, beispielsweise die Form von Eierkartons oder Pilzen. Außerdem kann durch die wellige Gestaltung der Drainageauflage die Fläche des Mikrofiltertuches vergrößert werden. Der erhöhte Druckverlust des Mikrofiltertuches wird durch ein niveaugesteuertes Ablaufventil kompensiert. Dieses niveaugesteuerte Ablaufregelventil regelt den Ablauf derart, daß sich hinter dem Mikrofiltertuch auf der Filtratseite (Reinwasserseite) ein Unterdruck von bis zum 9,5mWS ausbildet, aber kein Unterdruck im Filterbett entsteht.

Alternativ kann die flüssigkeitsdurchlässige Außenwand auch mit in Durchbrechungen der Wand eingesetzten Filterdüsen versehen sein, die sternförmig angeordnete Mikroschlitze aufweisen. Auch die Mikroschlitze dieser Filterdüsen werden ständig von dem sich vorbeibewegenden körnigen Filtermaterial von Verunreinigungen freigehalten. Die Filterdüsen zeichnen sich durch eine ausgezeichnete Standzeit aus.

Schließlich ist vorgesehen, daß die Reinigungsvorrichtung als Aufstromklassierer mit einer gleichmäßigen Wasserzufuhr und einer feinblasigen Bodenbelüftung ausgebildet ist. In diesem Aufstromklassierer werden die in der Regel leichteren abgeschiedenen Feststoffe von den schwereren körnigen Partikeln des Filtermaterials abgetrennt und oben ausgetragen. Unten werden demgegenüber die gereinigten körnigen Partikel des Filtermaterials ausgetragen. Die feinblasige Bodenbelüftung erfolgt über eine poröse Folie am Boden des Aufstromklassierers. Die aufsteigende Luft aktiviert und verstärkt den Reinigungsvorgang und minimiert, d. h. halbiert die für die Sortierung benötigte Flüssigkeitsmenge.

Ausführungsbeispiele der Erfindung werden im folgenden anhand der Zeichnungen näher erläutert. Es zeigen:
- Fig. 1: eine Filteranlage gemäß der Erfindung schematisch im Längsschnitt;
- Fig. 2: einen Längsschnitt durch einen Teilbereich der Außenwand in einer ersten Ausführungsform;
- Fig. 3: einen Querschnitt zu Fig. 2
- Fig. 4: einen Längsschnitt durch einen Teilbereich der Außenwand in einer zweiten Ausführungsform;
- Fig. 5: einen Querschnitt zu Fig. 4;
- Fig. 6: eine Ringlamelle im Schnitt;
- Fig. 7: eine Ringlamelle in einer Ansicht von unten;
- Fig. 8: eine alternative Ausführungsform der Filteranlage gemäß der Erfindung schematisch in Seitenansicht (nur der obere Bereich);
- Fig. 9: eine Filterdüse im Schnitt;
- Fig. 10: die in Fig. 10 dargestellte Filterdüse von unten;
- Fig. 11: die in Fig. 10 dargestellte Filterdüse von oben;
- Fig. 12: eine alternative Ausführungsform des Aufstromsortierers schematisch im Schnitt.

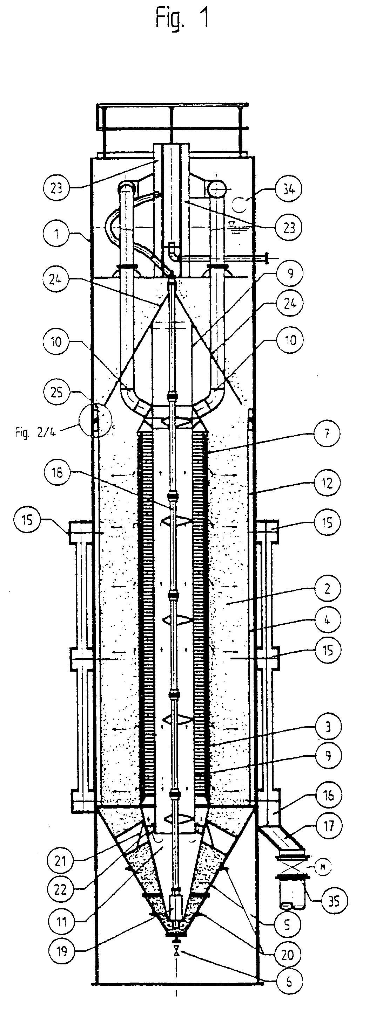

Die in Fig. 1 dargestellte Filteranlage weist einen zylindrischen Behälter auf, der in seiner Gesamtheit mit dem Bezugszeichen 1 bezeichnet. Der Behälter 1 umschließt einen mit körnigem Filtermaterial, z. B. Sand, gefüllten zylindrischen Ringraum 2. Der Ringraum 2 ist von einer flüssigkeitsdurchlässigen Innenwand 3 und einer ebenfalls flüssigkeitsdurchlässigen Außenwand 4 begrenzt. Unten schließt sich an den Ringraum 2 ein trichterförmiger Abschlußraum 5 an, der an seinem unteren Ende mit einem Entleerungsventil 6 versehen ist.

Die flüssigkeitsdurchlässige Innenwand 3 des Ringraumes 2 besteht aus säulenartig übereinandergestapelten Ringlamellen 7, die an ihrem äußeren Umfang nach unten geneigt sind und zwischen sich radiale Durchtrittsspalte 8 freilassen. Die Ringlamellen 7 umgeben mit Abstand ein Leitrohr 9, welches am oberen Ende einen Anschluß 10 für die zu filternde Flüssigkeit aufweist und am unteren Ende mit einem Umlenkraum 11 verbunden ist, der ebenfalls trichterförmig ausgebildet und innerhalb des trichterförmigen Abschlußraumes 5 des Ringraumes 2 angeordnet ist.

Die zu filtrierende Flüssigkeit wird, wie durch Pfeile in der Zeichnung angedeutet ist, am Anschluß 10 von oben in das Leitrohr 9 eingegeben, am unteren Ende des Leitrohres 9 in dem Umlenkraum 11 um 180° umgelenkt und steigt danach in dem Ringraum zwischen dem Leitrohr 9 und den Ringlamellen 7 nach oben auf und gelangt von dort über die Durchtrittsspalte 8 zwischen den Ringlamellen 7 in den mit Sand gefüllten zylindrischen Ringraum 2, und zwar gleichmäßig über dessen Höhe verteilt.

Die flüssigkeitsdurchlässige Außenwand 4 des zylindrischen Ringraumes 2 ist an ihrer Innenseite von einem feinen Siebgewebe 12, z. B. einem Mikrofiltertuch, abgedeckt, welches auf einer mit Drainagekanälen 13 versehenen Stützstruktur 14 aufliegt. Diese Stützstruktur 14 ist gewellt ausgebildet oder hat in Art eines Eierkartons regelmäßige Vor- und Rücksprünge und bildet auf diese Art und Weise eine gleichmäßige Abstützung für das Mikrofiltertuch 12. Durch die gewellt oder sonstige räumliche verkrümmte Anordnung des Mikrofiltertuches 12 erhält diese eine deutlich größere Oberfläche und damit Filterfläche, als bei glattzylindrischer Verlegung. Über die Drainagekanäle 13 kann das Filtrat (Reinwasser) unbehindert abfließen. Außen an der Außenwand 4 des Ringraumes 2 sind ringförmige Sammelleitungen oder Filtratsammelkammem 15 angeordnet, die mit den Drainagekanälen 13 in Verbindung stehen und durch vertikal verlaufende Rohre 16 verbunden sind. Die unterste Sammelleitung 15 ist mit einer Ablaufleitung 17 für das Filtrat verbunden. Weiterhin ist dem zylindrischen Behälter 1 ein Niveaumeßfühler 34 zugeordnet, der im Zusammenwirken mit einem in der unteren Ablaufleitung 17 angeordneten AbflußRegelventil 35 für die Aufrechterhaltung einer ausreichend großen Druckdifferenz an dem Mikrofiltertuch 12 sorgt. Das in die untere Ablaufleitung 17 eingebaute Regelventil macht es möglich, auf der Filtratseite (Reinwasserseite) hinter dem Mikrofiltertuch einen Unterdruck von maximal 9,5 mWS zu erzeugen.

Mittig durch das Leitrohr 9 verläuft vertikal das Förderrohr 18 einer Mammutpumpe, die das in dem Ringraum 2 befindliche körnige Filtermaterial, d. h. den Sand, zusammen mit den abgefilterten Feststoffen am unteren Ende des trichterförmigen Abschlußraumes 5 ansaugt, damit dieses körnige Filtermaterial nach der Reinigung von den abgefilterten Feststoffen dem Ringraum 2 von oben wieder zugeführt werden kann. Das Förderrohr 18 der Mammutpumpe weist am unteren Ende einen Ansaugkopf 19 auf, in dessen Bereich auch die für den Betrieb der Mammutpumpe erforderliche Druckluft zugeführt wird. Um den Zufluß des Sand-/Feststoff-Gemisches zum Ansaugkopf 19 der Mammutpumpe zu begünstigen, sind in der Wandung des trichterförmigen Abschlußraumes 5 Spüldüsen 20 angeordnet, die derart angeordnet und mit Wasser beaufschlagt sind, daß das körnige Filtermaterial innerhalb des Abschlußraumes 5 fluidisiert. In dem Abschlußraum 5 befindet sich ferner ein von oben nach unten konisch breiter werdender Leitring 21, der am äußeren Umfang des in dem Abschlußraum 5 befindlichen Umlenkraum 11 angeordnet ist. Unter diesem Leitring 21 befindet sich ein Schlammaustrag 22 des Umlenkraumes 11, über den die bereits in dem Umlenkraum 11 infolge der 180° Umlenkung abgeschiedenen Feststoffe als Schlamm in den Abschlußraum 5 eingeleitet werden. Dieser Schlamm wird zusammen mit dem Filtermaterial und den abgefilterten Feststoffen kontinuierlich mittels der Mammutpumpe ausgetragen.

Am oberen Ende der Filteranlage ist ein Aufstromsortierer 23 angeordnet, dem das von der Mammutpumpe angesaugte Gemisch aus körnigem Filtermaterial, abgefilterten Feststoffen und Schlamm aus dem Schlammaustrag 22 der Umlenkkammer 11 kontinuierlich von oben aufgegeben wird und im Gegenstrom sortiert wird. Dabei werden die spezifisch leichteren Schlammteile und die feinen Feststoffpartikel aus dem Aufstromsortierer 23 nach oben über einen Überlauf abgegeben. Das auf diese Weise gereinigte spezifisch schwerere körnige Filtermaterial wird demgegenüber in den Ringraum 2 zurückbefördert, um dort den Zyklus erneut zu durchlaufen.

Die Eingabe des gereinigten, körnigen Filtermatenals in den Ringraum 2 erfolgt über eine Zuführungseinrichtung, die ein kegelmantelförmiges Leitblech 24 aufweist, welches sich von oben nach unten aufweitet und am unteren Ende mit der Außenwand 4 des Ringraumes 2 einen engen Durchtrittsspalt 25 bildet. Im übrigen deckt dieses kegelmantelförmige Leitblech 24 die gesamte Oberseite des Ringraumes 2 ab, und zwar derart, daß das mittig auf das Leitblech 24 aufgegebene körnige Filtermaterial dem Ringraum 2 nur in der Nähe von dessen Außenwand 4 zugeführt wird.

Hierdurch bildet sich am oberen Ende der Schüttung des in dem Ringraum 2 befindlichen Filterbettes aus körnigem Filtermaterial eine von außen nach innen geneigte Böschung aus. Das körnige Filtermaterial besteht aus einem Korngemisch mit einem zwei oder mehr Korngrößen umfassenden Kornspektrum von Grobkorn (2,5 mm) bis Feinkorn (0,4 mm). Dieses Korngemisch entmischt sich beim Abrollen der einzelnen Körner über die Böschung der Schüttung derart, daß die gröberen Körner im Bereich der Innenwand 3 des Ringraumes 2 zu liegen kommen, während die feineren Körner in der Nähe der Außenwand 4 verbleiben. Hierdurch ergibt sich in der Schüttung des Filterbettes eine in radialer Richtung von innen nach außen kleiner werdende Korngröße des Filtermaterials. Durch diesen Korngrößengradienten wird der Filtervorgang positiv beeinflußt, wie in der Beschreibungseinleitung ausführlicher dargelegt worden ist.

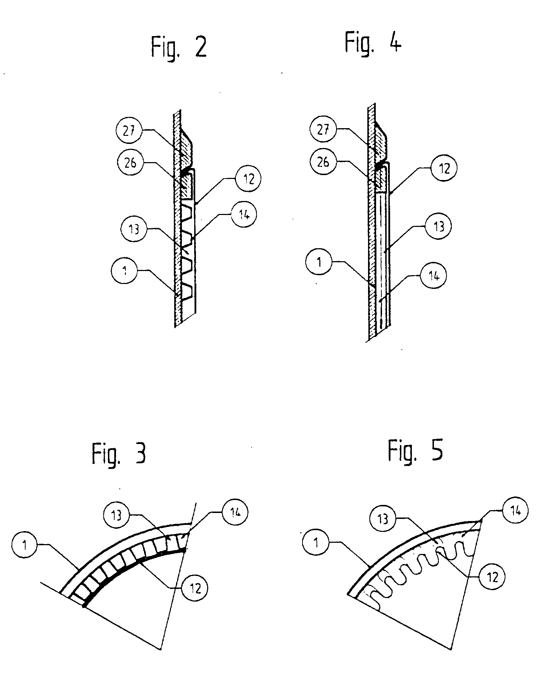

Die Figuren 2 und 3 zeigen in Seitenansicht und Draufsicht einen Abschnitt der Außenwand 4 des Ringraumes 2 im Detail. Wie ersichtlich ist, ist an der Innenseite der Außenwand 4 eine Stützstruktur 14 abgestützt, die - ähnlich wie ein Eierkarton - eine Vielzahl von Stütznocken in regelmäßigen Abständen aufweist. Auf diesen Stütznocken der Stützstruktur 14 liegt von innen her ein feines Siebgewebe 12 oder ein Mikrofiltertuch auf. Zwischen der Außenwand 4 und der Stützstruktur 14 wird eine Vielzahl von Drainagekanälen 13 gebildet, über welche das Filtrat ungehindert ablaufen kann. Zur Fixierung des Siebgewebes 12 dient ein innen an der Außenwand 4 befestigter feststehender Ring 26, gegen den ein beweglicher Spannring 27 axial anpreßbar ist. Die beiden Ringe 26 und 27 legen das Siebgewebe 12 zwischen sich fest.

Die Figuren 4 und 5 entsprechen weitgehend den Figuren 2 und 3, so daß für die einzelnen Teile die gleichen Bezugsziffern verwendet werden konnten. Hier hat die Stützstruktur 14 allerdings eine gewellte Form in Art eines Wellbleches und damit eine vergrößerte Oberfläche.

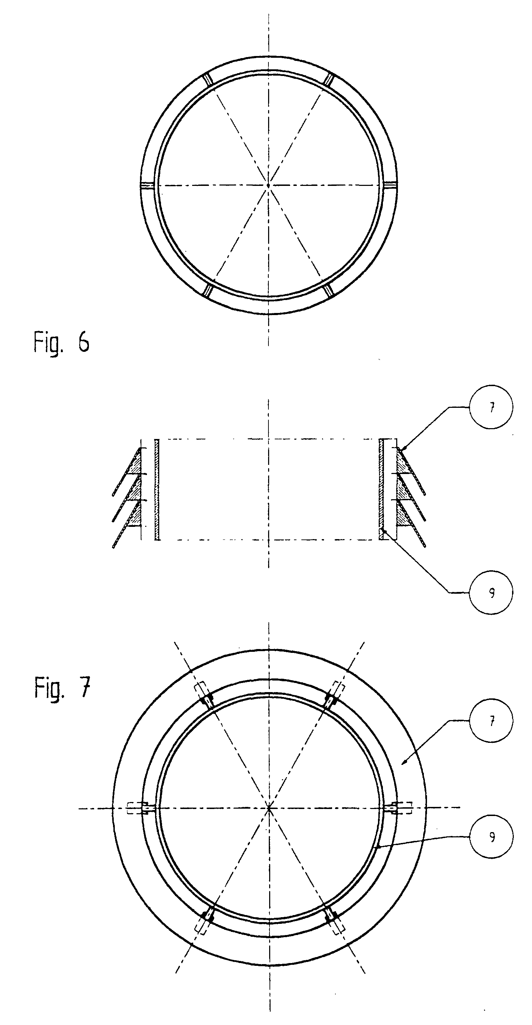

Die Figuren 6 und 7 zeigen im Schnitt und in einer Ansicht von unten eine der Ringlamellen 7, die säulenartig übereinandergestapelt die Innenwand 3 des Ringraumes 2 bilden.

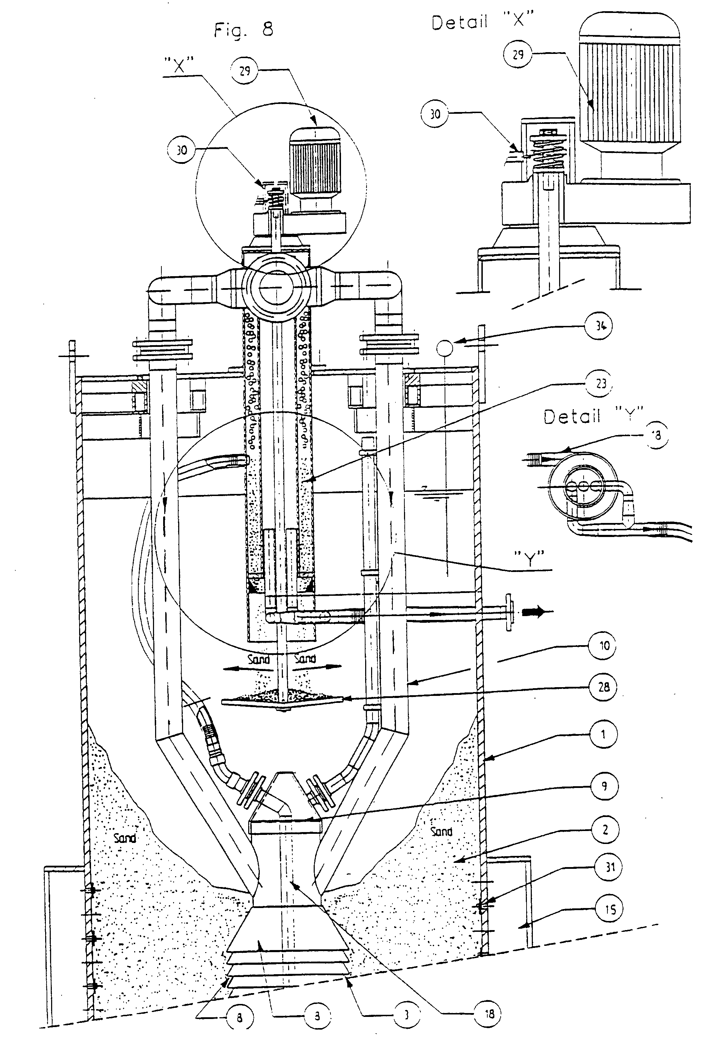

Figur 8 zeigt eine Alternative zum Leitblech 24. Bei dieser Ausführungsform ist oberhalb des Ringraumes 2 und unterhalb des Aufstromsortierers 23 ein Schleuderteller 28 angeordnet, der um eine vertikale Achse drehbar ist und von einem Antriebsmotor 29 angetrieben wird. Dieser Schleuderteller 28 schleudert das auf ihn auftreffende körnige Filtermaterial nach außen bis in den Bereich der Außenwand 4 des Ringraumes 2, so daß sich am oberen Ende der Schüttung des Filterbettes wieder die von außen nach innen geneigte Böschung ergibt, die in Figur 8 klar erkennbar ist. Auf dieser Böschung findet - ebenso wie oben anhand des Leitbleches 24 geschildert - die Entmischung von Grobkorn und Feinkorn statt, so daß sich auch hier wieder der bereits oben diskutierte Gradient der Körnung in der Schüttung des Filterbettes ergibt. Durch eine entsprechende Wahl der Drehzahl findet zusätzlich eine Klassierung von grob nach fein bereit während des Schleudervorganges statt. Dem Motor 29 des Schleudertellers 28 ist ein Schalter 30 zugeordnet, der den Motor immer dann einschaltet, wenn das auf dem Schleuterteller 28 lastende Gewicht an körnigem Material einen bestimmten Betrag überschritten hat. Auf diese Weise ist es möglich, die Zufuhr an körnigem Filtermaterial genau zu dosieren und die Fördermenge zu bestimmen.

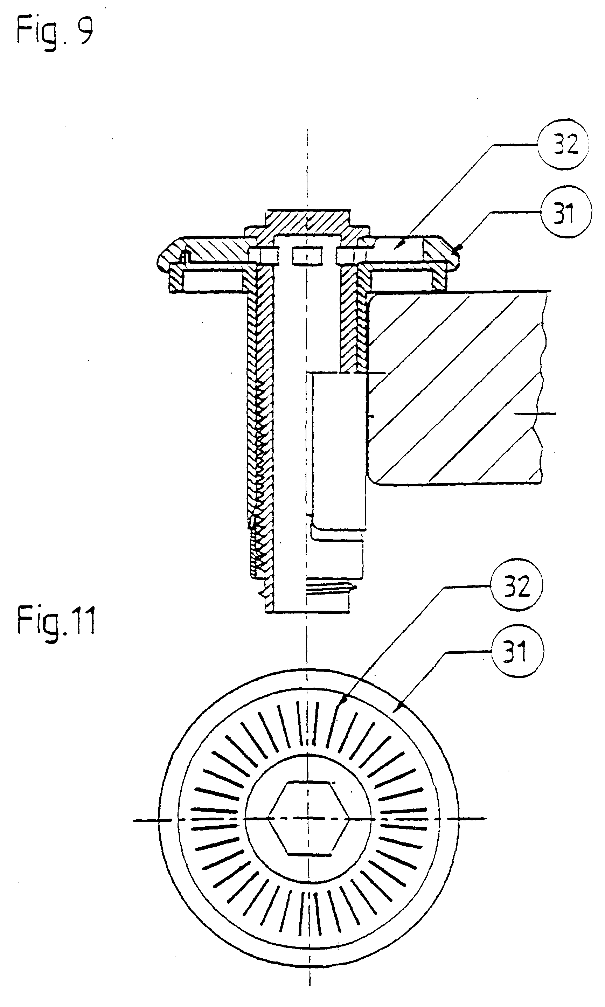

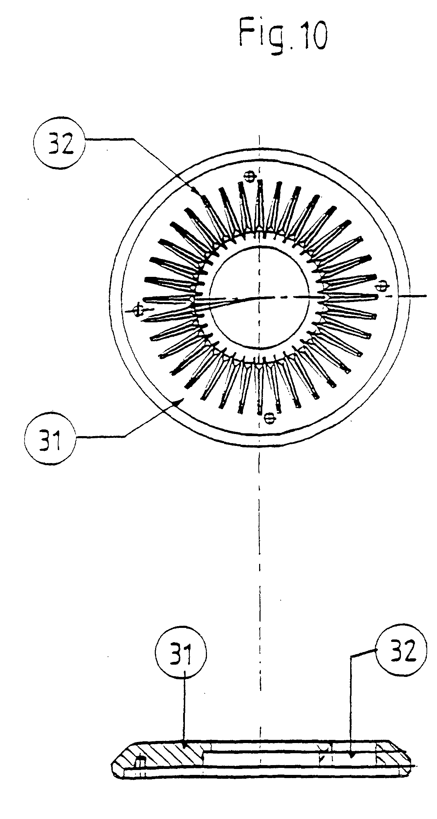

Wie aus Figur 8 weiter ersichtlich ist, ist hier die Außenwand 4 des Ringraumes 2 mit einer Vielzahl von Durchbrüchen versehen, in die Filterdüsen 31 eingesetzt sind. Diese Filterdüsen 31 weisen sternförmig verlaufende Mikroschlitze 32 auf, die sich in Durchflußrichtung erweitern. Derartige Mikroschlitze halten das körnige Filtermaterial zuverlässig zurück, werden von diesem bei der Vorbeibewegung des körnigen Filtermaterials gereinigt und verstopfen aufgrund ihrer besonderen Form nicht. Die genaue Ausgestaltung dieser Filterdüsen ergibt sich aus den Figuren 9 bis 11.

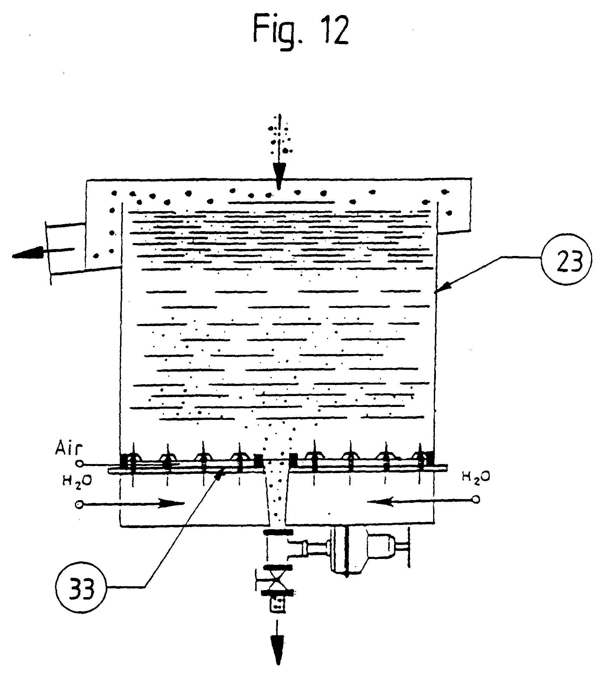

Die Figur 12 zeigt schließlich noch eine alternative Ausführungsform des Aufstromsortierers 23. Die Besonderheit dieses Aufstromsortierers besteht darin, daß dem aufsteigenden Reinigungswasser über eine poröse Folie 33 im Boden des Aufstromsortierers Druckluft zugeführt wird. Diese Art der Luftzuführung bewirkt eine besonders feine Verteilung der Luftblasen, wodurch der Aufstromsortierer mit erheblich weniger Flüssigkeit auskommt. Diese aufsteigende Luft aktiviert und verstärkt den Reinigungsvorgang.

## Patentansprüche

1. Verfahren zum kontinuierlichen Filtrieren von mit Feststoffen beladenen Flüssigkeiten, insbesondere zum Reinigen von Abwässern, mittels eines aus körnigem Filtermaterial bestehenden Filterbettes, welches kontinuierlich durch einen senkrecht angeordneten, zylindrischen Ringraum (2) bewegt wird, der kontinuierlich in radialer Richtung von der zu filtrierenden Flüssigkeit durchströmt wird, wobei
- das mit den abgefilterten Feststoffen beladene körnige Filtermaterial am unteren Ende des Ringraumes (2) kontinuierlich abgezogen, nach oben gefördert und von den abgefilterten Feststoffen befreit und dem Ringraum (2) am oberen Ende wieder zugeführt wird,
- als körniges Filtermaterial ein Korngemisch mit einem zwei oder mehr Korngrößen umfassenden Kornspektrum von Grobkorn bis Feinkorn verwendet wird,
- dieses Korngemisch vor oder während der Zuführung in den Ringraum (2) derart klassiert und verteilt wird, daß die Korngrößen in der Schüttung des Filterbettes in Fließrichtung der zu filtrierenden Flüssigkeit gesehen kleiner wird,
**dadurch gekennzeichnet**, daß einerseits die Korngrößen in der Schüttung des Filterbettes in radialer Richtung gesehen von innen nach außen kleiner werden und andererseits die zu filtrierende Flüssigkeit das Filterbett in radialer Richtung von innen nach außen mit abnehmender Fließgeschwindigkeit durchströmt.

2. Verfahren nach Anspruch 1, dadurch gekennzeichnet, daß die zu filtrierende Flüssigkeit im Bereich der Außenwand (4) des das Filterbett aufnehmenden Ringraumes (2) einer zusätzlichen Filtration mittels eines feinmaschigen Siebgewebes (12) oder mittels Filterdüsen (21) unterzogen wird.

3. Verfahren nach den Ansprüchen 1 und 2, dadurch gekennzeichnet, daß die zu filternde Flüssigkeit vor der Einleitung in das Filterbett in einem Umlenkraum (11) durch eine 180°-Umlenkung von groben und schweren Feststoffpartikeln befreit wird.

4. Vorrichtung zum kontinuierlichen Filtern von mit Feststoffen beladenen Flüssigkeiten zur Durchführung des Verfahrens nach den Ansprüchen 1 bis 3, mit folgenden Merkmalen:
- Ein zylindrisches Gehäuse (1) mit einem senkrecht angeordneten zylindrischen Ringraum (2) für das körnige Filtermaterial mit flüssigkeitsdurchlässiger Innenwand (3) und Außenwand (4),
- einer am unteren Ende des Ringraumes (2) angeordneten Abzugsvorrichtung (19, 20) für das mit Feststoff beladene körnige Filtermaterial,
- einer Mammutpumpe, deren in der Mitte des Gehäuses (1) verlaufendes Förderrohr (18) von der Abzugsvorrichtung (19, 20) bis über das obere Ende des Ringraumes (2) reicht,
- einer zwischen dem oberen Austragsende des Förderrohres (18) und dem oberen Ende des Ringraumes (2) angeordneten Reinigungsvorrichtung (23) für das körnige Filtermaterial,
- einer zwischen der Reinigungsvorrichtung (23) und dem oberen Ende des Ringraums (2) angeordneten Zuführvorrichtung (24, 28), die das gereinigte, körnige Filtermaterial dem Ringraum (2) im Bereich von dessen Außenwand (4) zuführt,
gekennzeichnet durch
- einen zwischen der flüssigkeitsdurchlässigen Innenwand (3) und dem Förderrohr (18) angeordnetes Leitrohr (9) für die zu filtrierende Flüssigkeit, welches am oberen Ende einen Anschluß (10) für die zu filtrierende Flüssigkeit aufweist und am unteren Ende mit einem Umlenkraum (11) verbunden ist, in welchem die zu filtrierende Flüssigkeit von der fallenden Fließrichtung in die steigende Fließrichtung umgelenkt und in den Ringspalt zwischen dem Leitrohr (9) und der flüssigkeitsdurchlässigen Innenwand (3) eingeleitet wird, wobei der Umlenkraum (11) mit einem Schlammaustrag versehen ist, der mit dem Ansaugkopf (19) der Mammutpumpe in Verbindung steht.

5. Vorrichtung nach Anspruch 4, dadurch gekennzeichnet, daß die flüssigkeitsdurchlässige Außenwand (4) an ihrer Innenseite von einem feinmaschigen Siebgewebe (12) abgedeckt ist, welches auf einer mit Drainagekanälen (13) versehenen Stützstruktur (14) aufliegt.

6. Vorrichtung nach Anspruch 4, dadurch gekennzeichnet, daß die flüssigkeitsdurchlässige Außenwand (4) mit in Durchbrechungen der Wand eingesetzten Filterdüsen (21) versehen ist, die sternförmig versehene Mikroschlitze (32) aufweisen.

7. Vorrichtung nach Anspruch 4, dadurch gekennzeichnet, daß die Reinigungsvorrichtung als Aufstromsortierer (23) ausgebildet ist, der mit einer feinblasigen Bodenbelüftung (33) versehen ist.

## Claims

1. Method for continuous filtration of fluids laden with solids, particularly for the treatment of waste water, by means of a filter bed consisting of granular filter media, which is moved continuously through a vertically oriented cylindrical annular space (2), continuously flowed through by the fluid to be filtered in a radial direction,
whereby the granular filter media, laden with the filtered solids, is withdrawn continuously near the lower end of the annular space (2), transported to the top, and, freed of the filtered solids, returned to the annular space at its upper end,
whereby a granular media, consisting of two or several grain size distributions from coarse to fine, is used as filter media,
this granular media being classified and distributed before and during its addition to the annular space (2) in such a way, that the grain sizes in the fill of the filter bed decrease in the flow direction of the fluid to be filtered,
characterized in, that on one hand the grain sizes decreasing in the fill of the filter bed in a radial direction from the inside to the outside, and on the other hand the fluid to be filtered flowing through the filter bed in a radial direction from the inside to the outside with decreasing velocity.

2. Method as claimed in claim 1, characterized through an additional filtration of the fluid to be filtered in the vicinity of the outer wall (4) of the annular space containing the filter bed, by means of a fine sieve material (12) or by means of filter nozzles (21).

3. Method as claimed in claim 1 and 2, characterized in that the fluid to be filtered before its introduction to the filter bed is being freed of ist coarser and heavier solid particles in a deflection chamber (11) by means of an 180° reversal.

4. Apparatus for the continuous filtration of fluids laden with solids for the execution of the methods as claimed in claims 1 - 3, having the following characteristics:
a cylindrical container (1) having a vertically oriented cylindrical annular space (2) for the granular filter media with an inner wall (3) and an outer wall (4) permeable for fluids, and
a withdrawal means (19, 20) for the granular filter media laden with solids, located at the lower end of said annular space (2),
an airlift pump whose airlift pipe (18) extends in the middle of send container from said withdrawal means (19, 20) to the upper end of said annular space (2),
a cleaning means (23) for the granular filter media, located between the upper discharge end of said transport pipe (18) and the upper end of said annular space (2)
an introduction means (24, 28), located between said cleaning means (23) and the upper end of said annular space (2) to return the cleaned granular fill material back to said annular space (2) in the vicinity of said outer wall (4),
characterized through
transport pipe (9) for the fluid to be filtered, located between the permeable inner wall (3) and the airlift pipe (18), providing at its upper end a connection means (10) for the fluid to be filtered, and in connection at its lower end with a deflection chamber (11), where the fluid to be filtered is reversed from a descending flow direction into a rising flow direction and is introduced into the annular gap between said transport pipe (9) and the permeable inner wall (3), whereby said deflection chamber (11) is equipped with a sludge withdrawel means, which is in connection with the suction head (19) of said airlift pump.

5. Apparatus as claimed in claim 4, characterized in that said permeable outer wall (4) is covered on its inner side by a fine mesh sieve material (12), placed on a support structure (14) having drainage channels (13).

6. Apparatus as claimed in claim 4, characterized in that said permeable outer wall contains filter nozzles (21) inserted in wall openings, having micro slits (32) arranged in a star-shaped pattern.

7. Apparatus as claimed in claim 4, characterized in that said cleaning means is configured as a hydraulic classifier (23), equipped with a fine bubble aeration means (33) at its bottom.

## Revendications

1. Procédé pour filtrer en continu des liquides chargés de matières dures, en particulier pour épurer des eaux usées, au moyen d'un lit de filtration constitué de matériau filtrant granulaire, animé d'un mouvement continuel dans un espace annulaire cylindrique (2) dressé verticalement et à travers lequel le liquide à filtrer coule continuellement radialement, avec les points suivants :
- le matériau filtrant granulaire chargé des matières dures filtrées est évacué continuellement à l'extrémité inférieure de l'espace annulaire (2), dirigé vers le haut, libéré des matières dures filtrées et reconduit vers l'espace annulaire (2) à l'extrémité supérieure,
- on utilise comme matériau filtrant granulaire un mélange granulaire avec plusieurs dimensions de grains comprenant une ou deux dimensions passant des gros grains aux grains fins,
- ce mélange granulaire est classé et réparti de telle sorte avant et pendant le déversement dans l'espace annulaire(2) que la dimension des grains dans la charge en vrac du lit de filtrage diminue vue dans le sens de l'écoulement du liquide à filtrer,
présentant les caractéristiques suivantes,
d'une part les dimensions des grains dans la charge en vrac du lit de filtrage diminuent dans une direction radiale de l'intérieur vers l'extérieur et d'autre part le liquide à filtrer traverse le lit de filtrage dans une direction radiale de l'intérieur vers l'extérieur à une vitesse d'écoulement diminuante.

2. Procédé selon la revendication 1 caractérisée par le fait que le liquide à filtrer est soumis à une filtration supplémentaire dans la zone de la paroi extérieure (4) de l'espace annulaire (2) contenant le lit de filtrage à l'aide d'un tissu de filtrage à mailles fines (12) ou à l'aide de buses de filtrage (31).

3. Procédé selon les revendications 1 et 2 caractérisé par le fait que le liquide à filtrer est libéré des particules grosses et lourdes de matière dure avant son introduction dans le lit de filtrage dans un espace de retournement (11) par un retournement de 180°.

4. Procédé pour filtrer en continu des liquides chargés de matières dures pour la mise en oeuvre du procédé selon les revendications 1 à 3, avec les caractéristiques suivantes :
- une cuve cylindrique (1) avec un espace annulaire cylindrique dirigé verticalement (2) pour le matériau filtrant granulaire ayant une paroi intérieure perméable aux liquides (3) et une paroi extérieure (4),
- un dispositif d'aspiration (19, 20) logé à l'extrémité inférieure de l'espace annulaire (2) pour le matériau à filtrer granulaire chargé de matières dures,
- une pompe mammouth dont le tube d'alimentation (18) situé au milieu de la cuve s'étend du dispositif d'évacuation (19,20) jusqu'au delà de l'extrémité supérieure de l'espace annulaire (2),
- un dispositif de nettoyage (23) pour le matériau granulaire à filtrer, situé entre l'extrémité supérieure du tube d'alimentation (18) et l'extrémité supérieure de l'espace annulaire (2),
- Un dispositif d'alimentation (24,28) situé entre le dispositif de nettoyage (23) et l'extrémité supérieure de l'espace annulaire (2) qui alimente l'espace annulaire (2) en matériau granulaire épuré dans la zone de sa paroi extérieure (4),
caractérisé par
- un tube de guidage (9) pour le liquide à filtrer, situé entre la paroi intérieure (3) perméable aux liquides et le tube d'alimentation (18) qui présente à son extrémité supérieure un raccord (10) pour le liquide à filtrer et est relié à son extrémité inférieure à une chambre de retournement (11), dans laquelle le liquide à filtrer est retourné passant d'un sens d'écoulement descendant à un sens d'écoulement montant et est introduit dans l'interstice annulaire situé entre le tube de guidage (9) et la paroi intérieure (3) perméable aux liquides, la chambre de retournement (11) étant équipée d'une évacuation des boues qui est en relation avec la tête d'aspiration (19) de la pompe mammouth.

5. Dispositif selon la revendication 4 caractérisé en ce que la paroi extérieure (4) perméable aux liquides est recouverte dans sa partie intérieure d'un tissu de tamisage à mailles fines (12) s'appuyant sur une structure de soutien (14) munie de canaux de drainage(13).

6. Dispositif selon la revendication 4 caractérisé par le fait que la paroi extérieure perméable aux liquides (4) est équipée de buses de filtrage (21) introduites dans des ouvertures de la paroi présentant des micro fentes en forme d'étoiles(32).

7. Dispositif selon la revendication 4 caractérisé par ce que le dispositif de nettoyage a la forme d'un trieur à courant ascendant (23) et est équipé d'une aération du fond (33) à fines bulles.
